# FASCICULE DE BREVET EUROPEEN

(11) **EP 2 724 088 B1**
(45) Date de publication et mention de la délivrance du brevet: **26.10.2016**
(21) Numéro de dépôt: 11743560.2
(22) Date de dépôt: 23.06.2011
(51) Int. Cl.: F24J 2/52, E04D 3/30, E04D 3/365

(54) **PANNEAU, ASSEMBLAGE DE PANNEAUX ET TOITURE ASSOCIÉE**
PLATTE, PLATTENANORDNUNG UND ZUGEHÖRIGE BEDACHUNG
PANEL, ASSEMBLY OF PANELS AND ASSOCIATED ROOFING

(43) Date de publication de la demande: 30.04.2014
(73) Titulaire: ArcelorMittal, 1160 Luxembourg (LU)
(72) Inventeur: CHABAS, Eric, F-77270 Villeparisis (FR); MASURE, David, F-92100 Boulogne Billancourt (FR)
(74) Mandataire: Lavoix
(86) Numéro de dépôt international: PCT/FR2011/000365
(87) Numéro de publication internationale: WO 2012/175818

(56) Documents cités:
- EP-A1- 0 553 012
- EP-A2- 2 103 755
- WO-A1-2010/005408
- DE-U1-202008 015 141
- US-A- 3 667 185
- US-A1- 2010 263 661

## Description

La présente invention concerne un panneau, plus particulièrement destiné à être assemblé pour permettre la construction de toitures de bâtiments porteuses de modules solaires, sans toutefois y être limité.

Il est connu de réaliser les couvertures de toit avec des panneaux nervurés, par exemple en acier galvanisé prélaqué, dont les bords se chevauchent pour assurer l'étanchéité de la toiture. De tels panneaux sont décrits dans le document EP 2103755 A2.

Il est par ailleurs connu de rapporter sur la couverture des bâtiments des modules solaires, notamment photovoltaïques, généralement constitués d'un cadre portant notamment des cellules photovoltaïques.

Ces modules solaires sont habituellement solidarisés à la toiture par l'intermédiaire d'un rail fixé sur les nervures des panneaux généralement par l'intermédiaire de cavaliers. Ce rail présente l'avantage d'écarter le module solaire de la toiture, favorisant la ventilation de la face arrière du module. Il permet également de solidariser à la toiture des modules solaires de longueur variable.

Cependant la pose d'un tel rail sur chantier est une réelle contrainte. La manutention des rails n'est pas aisée, le positionnement et la fixation des rails prennent du temps. Par ailleurs, la réalisation d'un tel assemblage doit permettre de continuer à assurer l'étanchéité de la couverture du bâtiment, ce que ne favorisent pas les conditions d'assemblage sur chantier.

La présente invention a pour but de pallier aux problèmes précités en proposant un système constructif assurant une fixation plus facile des modules solaires, une bonne étanchéité de la toiture ainsi qu'une bonne ventilation de la face arrière du module.

A cet effet, l'invention a pour premier objet un panneau présentant un profil comprenant :
- un premier bord longitudinal comprenant successivement au moins une première nervure longitudinale, une semelle et une deuxième nervure longitudinale, chacune des nervures longitudinales comprenant une partie centrale supérieure et deux ailes latérales,
- une partie centrale,
- un second bord longitudinal comprenant successivement une première portion latérale, une partie saillante apte à recevoir une fixation et une deuxième portion latérale, la première portion latérale, respectivement ladite deuxième portion latérale, étant au moins partiellement de même forme et sensiblement à la même hauteur que la partie centrale supérieure de la première nervure longitudinale, respectivement de la deuxième nervure longitudinale, l'espacement entre les portions latérales étant sensiblement équivalent à l'espacement entre les parties centrales supérieures des nervures longitudinales.

Le panneau selon l'invention peut également comprendre les caractéristiques optionnelles suivantes, prises isolément ou en combinaison :
- il est fait d'une tôle métallique profilée,
- La première portion latérale est reliée à la partie centrale du panneau par l'intermédiaire d'une liaison dont la forme épouse au moins partiellement la forme de la première nervure longitudinale,
- La liaison comprend un plateau de forme et de dimensions identiques à la partie saillante,
- Les parties centrales des nervures longitudinales sont de même forme et situées à la même hauteur,
- Le premier bord longitudinal comprend une succession de trois nervures longitudinales séparées respectivement par une semelle, l'espacement entre les parties centrales supérieures des nervures longitudinales étant constant.

Un second objet de l'invention est constitué par l'assemblage par recouvrement marginal d'au moins deux panneaux selon l'invention pour lequel le premier bord longitudinal d'un premier panneau est recouvert au moins partiellement par le second bord longitudinal de l'autre panneau, de façon à constituer un espace fermé formant une goulotte dans le sens longitudinal du premier panneau, l'espace fermé étant délimité, d'une part, pour le premier panneau, par les ailes latérales de deux nervures longitudinales successives et par la semelle les séparant et, d'autre part, pour l'autre panneau, par la partie saillante.

L'assemblage selon l'invention peut également comprendre la caractéristique optionnelle suivante :
- les panneaux sont solidarisés par l'intermédiaire de fixations au niveau du recouvrement des portions latérales et des parties centrales supérieures des nervures longitudinales.

Un troisième objet de l'invention est constitué par une toiture comprenant un assemblage selon l'invention pour laquelle au moins un module solaire est fixé directement sur les parties saillantes.

Un quatrième objet de l'invention est constitué par un kit pour la réalisation d'une toiture selon l'invention comprenant :
- Au moins deux panneaux selon l'invention,
- Des moyens de fixations permettant la fixation des panneaux sur la toiture,
- Au moins un module solaire,
- Des moyens de fixations permettant la fixation du module solaire sur les parties saillantes des panneaux,
- Optionnellement, des cavaliers permettant de faciliter le maintien en place du module solaire sur les parties saillantes.

Comme on l'aura compris, l'invention consiste donc à supprimer le recours à un rail de fixation et à modifier le profil du panneau de façon à ce que le recouvrement marginal de deux panneaux adjacents forme un caisson étanche sur lequel on peut fixer directement le module solaire.

L'invention sera mieux comprise à la lecture de la description qui suit, donnée à titre explicatif mais non limitatif, en référence aux figures annexées qui représentent :
- La figure 1 a représente un premier exemple de panneau selon l'invention
- La figure 1b représente un détail d'assemblage par recouvrement marginal de deux panneaux selon l'invention
- La figure 1c représente un détail d'une toiture de bâtiment selon l'invention porteuse de modules solaires
- La figure 2a représente un second exemple de panneau selon l'invention
- La figure 2b représente un premier mode d'assemblage par recouvrement marginal de deux panneaux selon l'invention
- La figure 2c représente un second mode d'assemblage par recouvrement marginal de deux panneaux selon l'invention

Les mêmes numéros de référence représentent les mêmes éléments dans chacune des figures.

Dans l'ensemble du texte, on entendra par panneau un élément de forme plate, c'est-à-dire de faible épaisseur comparée à ses autres dimensions. Le panneau peut se présenter sous la forme d'une plaque ou d'une feuille constituée d'un matériau unique ou d'un assemblage composite. Dans ce dernier cas, le panneau est une superposition de plusieurs couches du même matériau ou de matériaux différents. Le matériau en question peut être, entre autre, un matériau métallique, un polymère ou encore une céramique. On pourra citer à titre d'exemple non limitatif de matériaux métalliques l'acier, l'aluminium, le cuivre, le zinc. De préférence le panneau est une tôle métallique. De préférence, il s'agit d'acier préalablement galvanisé et prélaqué afin de le protéger de la corrosion. Le panneau peut optionnellement être moussé.

Dans le cadre de l'invention, le panneau aura été préalablement mis en forme au moyen de tout procédé connu de mise en forme parmi lesquels on citera à titre d'exemple non limitatif le pliage, le profilage, l'emboutissage, le moulage.

Cette mise en forme conduit notamment à la formation de nervures à la surface du panneau. Dans l'ensemble du texte on entendra par nervure une saillie formée à la surface du panneau. La nervure peut être de forme trapézoïdale, comme dans le cas des exemples de réalisation présentés ci-après, ou de forme rectangulaire, ondulée, sinusoïdale ou encore en oméga, par exemple. Elle comprend une partie centrale supérieure et deux ailes latérales.

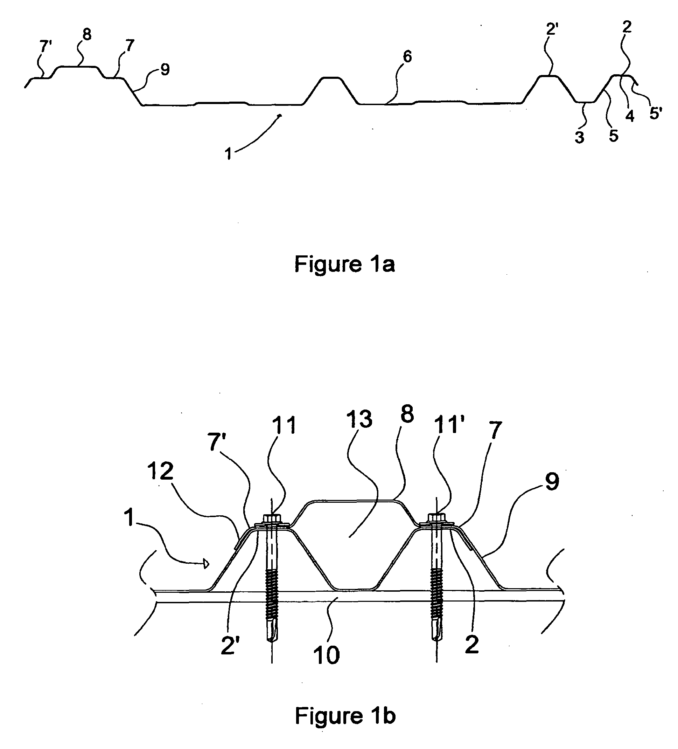

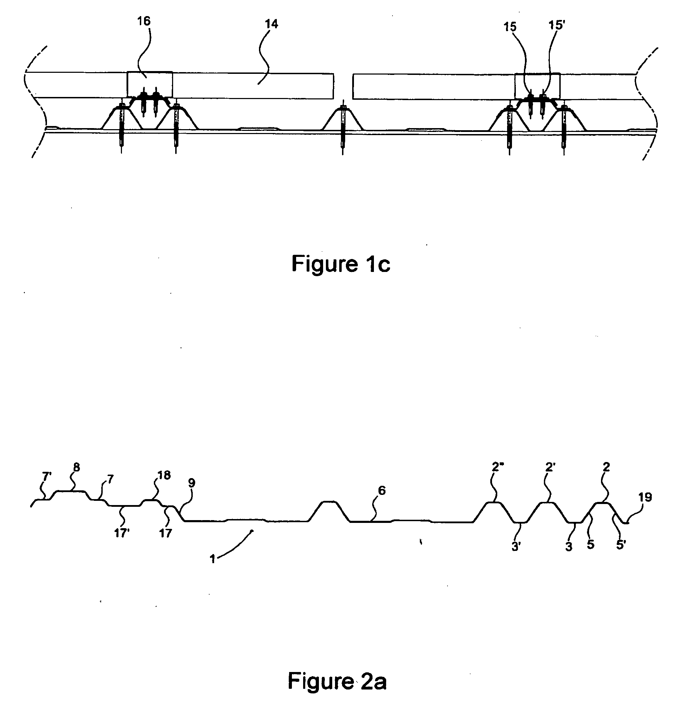

On décrit un exemple de panneau selon l'invention en référence aux figures 1a, 1b et 1c.

Le panneau 1 est présenté ici en coupe selon une coupe transversale. Un premier bord longitudinal du panneau 1 comprend successivement une première nervure longitudinale 2, une semelle 3 et une deuxième nervure longitudinale 2'. Chacune des nervures est constituée d'une partie centrale supérieure 4 et de deux ailes latérales 5, 5' prolongeant la partie centrale 4 dé part et d'autre de celle-ci. Dans le cas de cet exemple, la partie centrale supérieure 4 est plane et les ailes latérales 5, 5' sont inclinées, s'étendant vers le dessous et vers l'extérieur de la partie centrale supérieure 4.

Dans le cadre de l'invention, les nervures 2, 2' peuvent bien sûr présenter d'autres formes que celle décrite dans le cas de cet exemple. La nervure 2 peut également présenter une forme différente de la nervure 2' et/ou avoir une partie centrale supérieure 4 située à une hauteur différente de celle de la nervure 2'. Par ailleurs, l'aile latérale 5' de la nervure longitudinale 2 peut être tronquée, comme dans le cas de la figure 1a, ou non en fonction de la résistance mécanique souhaitée de cette partie du panneau.

Le second bord longitudinal du panneau 1 comprend successivement une première portion latérale 7, une partie saillante 8 et une deuxième portion latérale 7', la première portion latérale 7 étant reliée à la partie centrale 6 du panneau 1 par l'intermédiaire d'une liaison 9.

Dans le cas de cet exemple, la partie saillante 8 présente une forme équivalente aux nervures longitudinales 2, 2'. Cependant d'autres formes sont bien sûr possibles parmi lesquelles on pourra citer à titre d'exemples non limitatifs les formes rectangulaires, curvilignes et sinusoïdales. On veillera simplement à ce que la partie saillante 8 soit apte à recevoir une fixation telle qu'une vis autotaraudeuse, par exemple.

Comme illustré à la figure 1b, les portions latérales 7, 7' présentent, quant à elles, une configuration leur permettant de venir recouvrir au moins partiellement les parties centrales supérieures 4 des nervures longitudinales 2, 2' lors de l'assemblage par recouvrement marginal de deux panneaux 1, c'est-à-dire lorsque le premier bord longitudinal du premier panneau est recouvert au moins partiellement par le second bord longitudinal de l'autre panneau. Par configuration, il faut entendre ici, l'ensemble des caractéristiques suivantes : la forme de ces portions latérales, leur hauteur comparativement à la partie centrale 6 du panneau et leur espacement.

Dans le cas de cet exemple, les portions latérales sont planes à l'image des parties centrales supérieures des nervures, présentent un espacement équivalent à l'espacement entre ces mêmes parties centrales supérieures et sont situées dans un plan légèrement supérieur au plan formé par ces mêmes parties centrales supérieures afin de permettre le recouvrement.

Cependant, dans le cadre de l'invention, la nervure 2 pouvant présenter une forme différente de la nervure 2' et/ou avoir une partie centrale supérieure 4 située à une hauteur différente de celle de la nervure 2', il en va de même pour les portions latérales 7, 7'. Lors de la réalisation de cette version du panneau selon l'invention, afin de permettre l'assemblage de deux panneaux adjacents, on veillera simplement à ce que la première portion latérale 7, respectivement la deuxième portion latérale 7', soit au moins partiellement de même forme et sensiblement à la même hauteur que la partie centrale supérieure 4 de la nervure longitudinale 2, respectivement 2'. On veillera de même à ce que l'espacement entre les deux portions latérales 7, 7' soit sensiblement équivalent à l'espacement entre les parties centrales supérieures 4 des nervures longitudinales 2, 2'.

Le recouvrement des parties centrales supérieures 4 par les portions latérales 7, 7' doit être suffisant pour permettre la solidarisation des deux panneaux 1 entre eux et/ou à la structure 10 du bâtiment par l'intermédiaire de fixations 11, 11', telles que des vis autoperforeuses ou autotaraudeuses ou encore des rivets pop. Ces fixations 11, 11' sont en effet situées au niveau des parties centrales supérieures 4 et des portions latérales 7, 7' et non en partie inférieure du panneau afin d'éviter la stagnation d'eau à leur voisinage et donc une éventuelle défaillance de l'étanchéité de la toiture.

De préférence, et toujours dans un souci d'étanchéité de la toiture, la deuxième portion latérale 7' comprend une bavette 12 recouvrant en partie l'aile latérale 5 de la nervure longitudinale 2' du panneau adjacent.

De préférence, la liaison 9 épouse, quant à elle, la forme de l'aile latérale 5' de la nervure longitudinale 2 afin de faciliter le recouvrement et rigidifier cette portion du panneau. D'autres formes de liaison 9 sont cependant possibles en fonction de l'esthétique souhaitée.

Par l'assemblage par recouvrement marginal de deux panneaux adjacents, l'ensemble formé d'une part par les ailes latérales de deux nervures longitudinales 2, 2' et la semelle 3 d'un panneau 1 et d'autre part par la partie saillante 8 du panneau adjacent constitue un espace fermé 13 formant une goulotte dans le sens longitudinal du panneau 1.

Comme illustré à la figure 1c, des modules solaires 14 peuvent être fixés directement sur la partie saillante 8 de préférence au moyen de fixations 15, 15', telles que des vis autoperforeuses, sans avoir recours à un rail. Des cavaliers 16, optionnels, peuvent permettre de faciliter le maintien en place des modules 14 sur la partie saillante 8.

De préférence, la partie saillante 8 sera assez haute pour que le cadre du module solaire, posé sur cette même partie saillante, ne puisse pas buter contre les fixations 11, 11'. La hauteur de la partie saillante sera également ajustée de façon à obtenir une rigidité suffisante de cette portion du panneau de façon à ce que celui-ci résiste à la charge et aux sollicitations mécaniques engendrées par exemple par le vent ou la présence d'une personne sur le toit.

Un assemblage tel que celui présenté à la figure 1c permet d'assurer l'étanchéité de la toiture. En effet, en cas de défaut d'étanchéité des fixations 15, 15', l'eau, ruisselant sur le toit et pénétrant au niveau de ces fixations, sera récupérée dans l'espace fermé ou goulotte 13 et évacuée vers l'extérieur de la toiture par ruissellement de l'eau dans la goulotte. L'étanchéité de la toiture est ainsi préservée.

Un tel assemblage permet également de maintenir une bonne ventilation de la face arrière du module, cette dernière étant à distance suffisante de la partie centrale 6 du panneau.

Un tel assemblage permet également de faciliter le câblage électrique des modules solaires. En effet, dans le cas d'un assemblage selon l'art antérieur, un coté entier du cadre du module solaire repose sur le rail ce qui empêche le passage des câbles électriques à ce niveau à moins que ne soient pratiquées des ouvertures dans le rail. Dans le cadre de l'invention, le cadre du module solaire ne repose que ponctuellement sur la partie saillante 8. Il est alors facile de passer les câbles électriques entre la partie saillante 8 et la face arrière du module solaire.

Dans le cas de cet exemple, le panneau 1 comprend par ailleurs d'autres nervures en partie centrale 6. Ces nervures ont une fonction esthétique et/ou rigidifient le panneau.

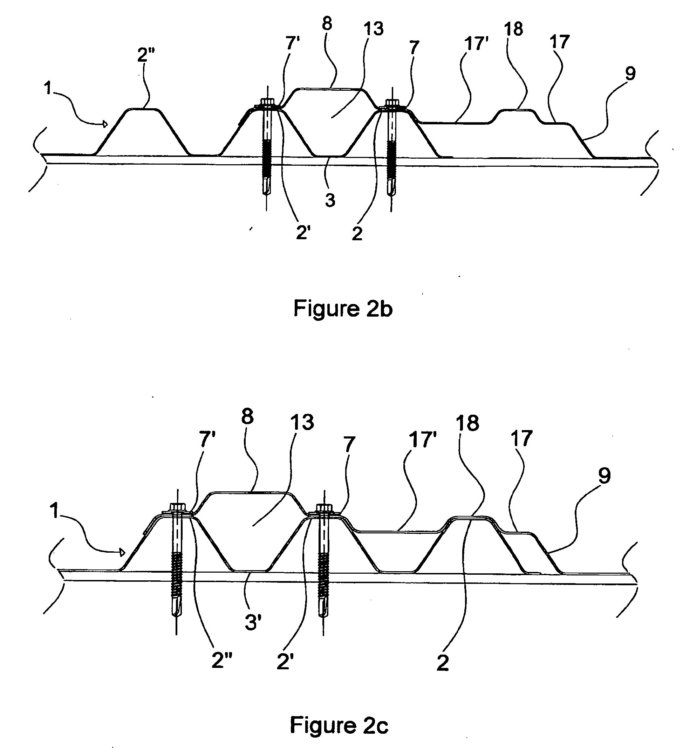

On décrit maintenant un second exemple de panneau selon l'invention en référence aux figures 2a, 2b et 2c.

En référence à la figure 2a, un premier bord longitudinal comprend une succession de trois nervures longitudinales 2, 2', 2" séparées par une semelle 3, respectivement 3'. Chacune des nervures est constituée d'une partie centrale supérieure 4 et de deux ailes latérales 5, 5' prolongeant la partie centrale 4 de part et d'autre de celle-ci. Le second bord longitudinal du panneau 1 comprend une partie saillante 8 et deux portions latérales 7, 7' situées de part et d'autre de la partie saillante 8. Dans le cas de cet exemple, la liaison 9, reliant la première portion latérale 7 à la partie centrale 6 du panneau 1, a été modifiée afin de permettre l'assemblage par recouvrement marginal de deux panneaux comme illustré aux figures 2b et 2c. Elle comprend successivement un premier plateau 17, une nervure 18 et un deuxième plateau 17'.

Comme illustré aux figures 2b et 2c, les deux portions latérales 7, 7' d'un premier panneau viennent alternativement recouvrir au moins partiellement :
- soit les parties centrales supérieures 4 des nervures 2 et 2' du panneau adjacent,
- soit les parties centrales supérieures 4 des nervures 2' et 2" du panneau adjacent. Dans ce dernier cas, la liaison 9 épouse au moins partiellement la forme de la nervure 2 du panneau adjacent qu'elle recouvre.

La goulotte 13 ainsi formée est alternativement délimitée par :
- soit l'ensemble formé d'une part par les ailes latérales des deux nervures longitudinales 2, 2' et la semelle 3 d'un panneau 1 et d'autre part par la partie saillante 8 du panneau adjacent,
- soit l'ensemble formé d'une part par les ailes latérales des deux nervures longitudinales 2', 2" et la semelle 3' d'un panneau 1 et d'autre part par la partie saillante 8 du panneau adjacent.

Une telle alternative offre l'avantage supplémentaire de permettre de modifier le pas entre deux parties saillantes 8 successives, autrement dit la distance entre les 2 points de fixation d'un module solaire porté par la toiture. Cette caractéristique est d'importance car les modules solaires sont de dimensions variables et les panneaux habituellement destinés à la construction de toitures de bâtiments porteuses de modules solaires ne sont compatibles qu'avec un nombre très restreint de modules solaires. En ayant la possibilité de modifier le pas entre deux parties saillantes successives, on rend le panneau selon l'invention compatible avec d'autant plus de modules solaires.

Cette caractéristique permet de limiter le nombre de panneaux différents au catalogue et facilite la gestion des stocks. L'ajustement du pas entre deux parties saillantes 8 est réalisé directement au moment de la pose en fonction du module solaire sélectionné par le client.

Cependant, dans le cas de ce mode de réalisation de l'invention, et afin de rendre possible une telle alternance dans la position respective de deux panneaux adjacents, on veillera à ce que les parties centrales supérieures 4 des nervures successives 2, 2' 2" soient de forme et de hauteur identiques, ainsi que d'espacement constant entre elles.

Préférentiellement l'aile latérale 5' de la nervure longitudinale 2 de ce mode de réalisation de l'invention comprend un pied d'appui 19, comme illustré à la figure 2a. Ce pied permet de mieux reprendre la charge d'un module solaire fixé à la partie saillante 8 et d'ainsi éviter l'affaissement éventuel de cette partie du panneau 1 en cas de forte charge ou de sollicitation mécanique de la toiture, en particulier dans le cas du recouvrement selon la figure 2b.

Dans le cas de cet exemple, la liaison 9 comprend successivement un premier plateau 17, une nervure 18 et un deuxième plateau 17'. La nervure 18 présente préférentiellement la même forme que la nervure 2 à l'exception des deux ailes latérales qui sont plus courtes. Le premier plateau 17 permet d'éloigner la liaison 9 du pied d'appui 19 du panneau qu'il recouvre et d'ainsi faciliter le recouvrement de deux panneaux successifs, en particulier dans le cas du recouvrement selon la figure 2c. Le deuxième plateau 17' est préférentiellement de dimension et forme telles qu'il permet de partiellement recouvrir le creux d'onde formé par la succession des deux nervures longitudinales 2, 2' lors de l'assemblage de deux panneaux comme présenté à la figure 2c. Cette forme de liaison permet de minimiser la quantité de matériau utilisé tout en conservant une bonne rigidité de l'ensemble.

Alternativement le deuxième plateau 17' peut être de forme et de dimensions identiques à la partie saillante 8. Ainsi lors de l'assemblage par recouvrement marginal de deux panneaux comme présenté à la figure 2c, on forme deux goulottes 13 parallèles. Il est alors possible de fixer indifféremment le module solaire 14 sur l'une ou l'autre des goulottes, ce qui offre plus de flexibilité dans la réalisation de la toiture et permet d'ajuster encore davantage la toiture aux dimensions des modules solaires.

On s'est limité ici à une succession de 3 nervures longitudinales afin d'obtenir deux pas possibles entre deux parties saillantes successives. Alternativement, on pourra ajuster le nombre de nervures longitudinales successives afin d'ajuster le nombre de pas possibles. On veillera simplement à modifier la forme de la liaison 9 en conséquence.

## Revendications

1. Panneau (1) présentant un profil comprenant :
- un premier bord longitudinal comprenant successivement au moins une première nervure longitudinale (2), une semelle (3) et une deuxième nervure longitudinale (2'), chacune desdites nervures longitudinales comprenant une partie centrale supérieure (4) et deux ailes latérales (5, 5'),
- une partie centrale (6),
- un second bord longitudinal comprenant successivement une première portion latérale (7), une partie saillante (8) apte à recevoir une fixation (15, 15') et une deuxième portion latérale (7'), ladite première portion latérale (7), respectivement ladite deuxième portion latérale (7'), étant au moins partiellement de même forme et sensiblement à la même hauteur que la partie centrale supérieure (4) de ladite première nervure longitudinale (2), respectivement de ladite deuxième nervure longitudinale (2'), l'espacement entre lesdites portions latérales (7, 7') étant sensiblement équivalent à l'espacement entre les parties centrales supérieures (4) desdites nervures longitudinales (2, 2').

2. Panneau selon la revendication 1 fait d'une tôle métallique profilée.

3. Panneau selon l'une quelconque des revendications précédentes pour lequel ladite première portion latérale (7) est reliée à ladite partie centrale (6) du panneau (1) par l'intermédiaire d'une liaison (9) dont la forme épouse au moins partiellement la forme de ladite première nervure longitudinale (2).

4. Panneau selon la revendication 3 pour lequel ladite liaison (9) comprend un plateau (17') de forme et de dimensions identiques à ladite partie saillante (8).

5. Panneau selon l'une quelconque des revendications précédentes pour lequel les parties centrales (4) desdites nervures longitudinales (2, 2') sont de même forme et situées à la même hauteur.

6. Panneau selon l'une quelconque des revendications précédentes pour lequel le premier bord longitudinal comprend une succession de trois nervures longitudinales (2, 2', 2") séparées respectivement par une semelle (3, 3'), l'espacement entre les parties centrales supérieures (4) desdites nervures longitudinales (2, 2', 2") étant constant.

7. Assemblage par recouvrement marginal d'au moins deux panneaux selon l'une quelconque des revendications précédentes pour lequel ledit premier bord longitudinal d'un premier panneau (1) est recouvert au moins partiellement par ledit second bord longitudinal de l'autre panneau, de façon à constituer un espace fermé (13) formant une goulotte dans le sens longitudinal du premier panneau, ledit espace fermé étant délimité, d'une part, pour le premier panneau, par les ailes latérales (5, 5') de deux nervures longitudinales successives (2, 2', 2") et par ladite semelle (3, 3') les séparant et, d'autre part, pour l'autre panneau, par ladite partie saillante (8).

8. Assemblage selon la revendication 7 pour lequel lesdits panneaux sont solidarisés par l'intermédiaire de fixations (11, 11') au niveau du recouvrement desdites portions latérales (7, 7') et des parties centrales supérieures (4) desdites nervures longitudinales (2, 2', 2").

9. Toiture comprenant un assemblage selon l'une quelconque des revendications 7 ou 8 pour laquelle au moins un module solaire (14) est fixé directement sur lesdites parties saillantes (8).

10. Kit pour la réalisation d'une toiture selon la revendication 9 comprenant :
- Au moins deux panneaux (1) selon l'une quelconque des revendications 1 à 6,
- Des moyens de fixations (11, 11') permettant la fixation desdits panneaux (1) sur ladite toiture,
- Au moins un module solaire (14),
- Des moyens de fixations (15, 15') permettant la fixation dudit module solaire (14) sur les parties saillantes (8) desdits panneaux (1),
- Optionnellement, des cavaliers (16) permettant de faciliter le maintien en place dudit module solaire (14) sur lesdites parties saillantes (8).

## Patentansprüche

1. Platte (1), welche ein Profil aufweist, welches aufweist:
- einen ersten Längsrand, welcher nacheinander wenigstens eine erste Längsrippe (2), einen Flansch (3) und eine zweite Längsrippe (2') aufweist, wobei jede der Längsrippen einen oberen, zentralen Abschnitt (4) und zwei Seitenflügel (5,5') aufweist,
- einen Zentralteil (6),
- einen zweiten Längsrand, welcher nacheinander einen ersten Seitenabschnitt (7), einen vorstehenden Abschnitt (8), welcher dazu eingerichtet ist, eine Halterung (15, 15') aufzunehmen, und einen zweiten Seitenabschnitt (7') aufweist, wobei der erste Seitenabschnitt (7) bzw. der zweite Seitenabschnitt (7') wenigstens teilweise aus derselben Form und im Wesentlichen auf derselben Höhe wie der obere, zentrale Abschnitt (4) der ersten Längsrippe (2) bzw. der zweiten Längsrippe (2') ist, wobei der Abstand zwischen den Seitenabschnitten (7, 7') im Wesentlichen gleich dem Abstand zwischen den oberen, zentralen Abschnitten (4) der Längsrippen (2, 2') ist.

2. Platte gemäß dem Anspruch 1, welche aus einem profilierten Metallblech gefertigt ist.

3. Platte gemäß irgendeinem der vorhergehenden Ansprüche, bei welcher der erste Seitenabschnitt (7) mit dem Zentralteil (6) der Platte (1) über ein Verbindungselement (9), dessen Form sich wenigstens teilweise an die Form der ersten Längsrippe (2) anpasst, verbunden ist.

4. Platte gemäß dem Anspruch 3, bei welcher das Verbindungselement (9) ein Plateau (17') von einer Form und mit Abmessungen, welche mit dem vorstehenden Abschnitt (8) identisch sind, aufweist.

5. Platte gemäß irgendeinem der vorhergehenden Ansprüche, bei welcher die zentralen Abschnitte (4) der Längsrippen (2,2') von derselben Form sind und auf derselben Höhe angeordnet sind.

6. Platte gemäß irgendeinem der vorhergehenden Ansprüche, bei welcher der erste Längsrand eine Folge von drei, gegenseitig durch einen Flansch (3, 3') getrennten Längsrippen (2, 2', 2") aufweist, wobei der Abstand zwischen den oberen, zentralen Abschnitten (4) der Längsrippen (2, 2', 2") konstant ist.

7. Einrichtung durch Randüberlappung von wenigstens zwei Platten gemäß irgendeinem der vorhergehenden Ansprüche, bei welcher der erste Längsrand einer ersten Platte (1) wenigstens teilweise durch den zweiten Längsrand der anderen Platte überlappt ist, um einen geschlossenen Raum (13), welcher einen Kanal in der Längsrichtung der ersten Platte bildet, auszubilden, wobei der geschlossene Raum einerseits für die erste Platte mittels der Seitenflügel (5,5') der zwei aufeinanderfolgenden Längsrippen (2, 2', 2") und mittels des Flanschs (3, 3'), welcher sie trennt, und andererseits für die andere Platte mittels dem vorstehenden Abschnitt (8) begrenzt ist.

8. Einrichtung gemäß Anspruch 7, bei welcher die Platten über Befestigungen (11, 11') auf dem Niveau der Überlappung der Seitenabschnitte (7,7') und der oberen, zentralen Abschnitte (4) der Längsrippen (2, 2', 2") fest verbunden sind.

9. Dachkonstruktion, aufweisend eine Einrichtung gemäß irgendeinem der Ansprüche 7 oder 8, bei welcher wenigstens ein Solarmodul (14) direkt auf dem vorstehendem Abschnitt (8) befestigt ist.

10. Bausatz zum Realisieren einer Dachkonstruktion gemäß Anspruch 9, aufweisend:
- wenigstens zwei Platten (1) gemäß irgendeinem der Ansprüche 1 bis 6,
- Befestigungsmittel (11, 11'), welche die Befestigung der Platten auf der Dachkonstruktion ermöglichen,
- wenigstens ein Solarmodul (14),
- Haltemittel (15, 15'), welche die Halterung des Solarmoduls auf den vorstehenden Abschnitten (8) der Platten (1) ermöglichen,
- optionalerweise Klammern (16), welche es ermöglichen, das Halten des Solarmoduls (14) am Ort auf den vorstehenden Abschnitten (8) zu erleichtern.

## Claims

1. A panel (1) having a profile comprising:
- a first longitudinal edge successively comprising at least one first longitudinal rib (2), one base plate (3) and one second longitudinal rib (2'), each of said longitudinal ribs comprising an upper central part (4) and two lateral wings (5, 5');
- a central part (6);
- a second longitudinal edge successively comprising a first lateral portion (7), a projecting part (8) capable of receiving a fastener (15, 15') and a second lateral portion (7'), said first lateral portion (7), respectively said second lateral portion (7'), being at least partly the same shape and substantially at the same height as said upper central part (4) of said first longitudinal rib (2), respectively of said second longitudinal rib (2'), the spacing between said lateral portions (7, 7') being substantially equivalent to the spacing between said upper central parts (4) of said longitudinal ribs (2, 2').

2. The panel according to claim 1, made from a profiled metallic sheet.

3. The panel according to any one of the preceding claims, wherein said first lateral portion (7) is connected to said central part (6) of said panel (1) by means of a link (9), the shape of which at least partly conforms to the shape of said first longitudinal rib (2).

4. The panel according to claim 3, wherein said link (9) comprises a platform (17') of identical shape and size to said projecting part (8).

5. The panel according to any one of the preceding claims, wherein said central parts (4) of said longitudinal ribs (2, 2') are the same shape and are located at the same height.

6. The panel according to any one of the preceding claims, wherein said first longitudinal edge comprises a succession of three longitudinal ribs (2, 2', 2") that are respectively separated by a base plate (3, 3'), the spacing between said upper central parts (4) of said longitudinal ribs (2, 2', 2") being constant.

7. An assembly involving marginally overlapping at least two panels according to any one of the preceding claims, wherein said first longitudinal edge of a first panel (1) is at least partly overlapped by said second longitudinal edge of the other panel, so as to form a closed space (13) forming a trough in the longitudinal direction of said first panel, said closed space being demarcated, on the one hand, for said first panel, by the lateral wings (5, 5') of two successive longitudinal ribs (2, 2', 2") and by said base plate (3, 3') that separates them and, on the other hand, for the other panel, by said projecting part (8).

8. The assembly according to claim 7, wherein said panels are rigidly connected together by means of fasteners (11, 11') at the overlap of said lateral portions (7, 7') and said upper central parts (4) of said longitudinal ribs (2 2', 2").

9. A roof comprising an assembly according to any one of claims 7 to 8, wherein at least one solar module (14) is directly fastened to said projecting parts (8).

10. A kit for producing a roof according to claim 9, comprising:
- at least two panels (1) according to any one of claims 1 to 6;
- fastening means (11, 11') allowing said panels (1) to be fastened to said roof;
- at least one solar module (14);
- fastening means (15, 15') allowing said solar module (14) to be fastened to said projecting parts (8) of said panels (1);
- optionally, brackets (16) for facilitating the retention in place of said solar module (14) on said projecting parts (8).
